# EUROPEAN PATENT APPLICATION

(11) **EP 0 596 686 A1**
(43) Date of publication of application: **11.05.1994**
(21) Application number: 93308722.3
(22) Date of filing: 01.11.1993
(51) Int. Cl.: B23K 9/20

(54) **Stud welding process**

(30) Priority: 06.11.1992 JP 297368/92
(71) Applicant: EMHART INC., Newark, Delaware 19711 (US)
(72) Inventor: Kito, Masaru, Toyohashi City (JP)
(74) Representative: Stagg, Diana Christine

(57) **Abstract**

Modified stud welding process wherein an annular member (21) made of a magnetic permeable material is held against the workpiece on the side away from the stud (19) during arc discharge with the centre of the annular member positioned to correspond with the tip of the weld stud (19). The annular member (21) serves to stabilise and make uniform the magnetic field in the region of the stud and of the arc.

## Description

The present invention relates to a stud welding process for welding a stud supported by a welding gun to a workpiece by means of an electric arc discharge.

It is well known to use a stud welding process comprising placing the tip of a stud supported by a welding gun at a welding position of a workpiece, producing an arc discharge across the stud and the workpiece by lifting the stud from the workpiece, melting the tip of the stud and a portion of the workpiece by the discharge, and plunging the stud into the molten material. For example, when a component is to be mounted on a motor vehicle body, a stud is welded to the vehicle body and a clip for supporting the component can be attached to the stud.

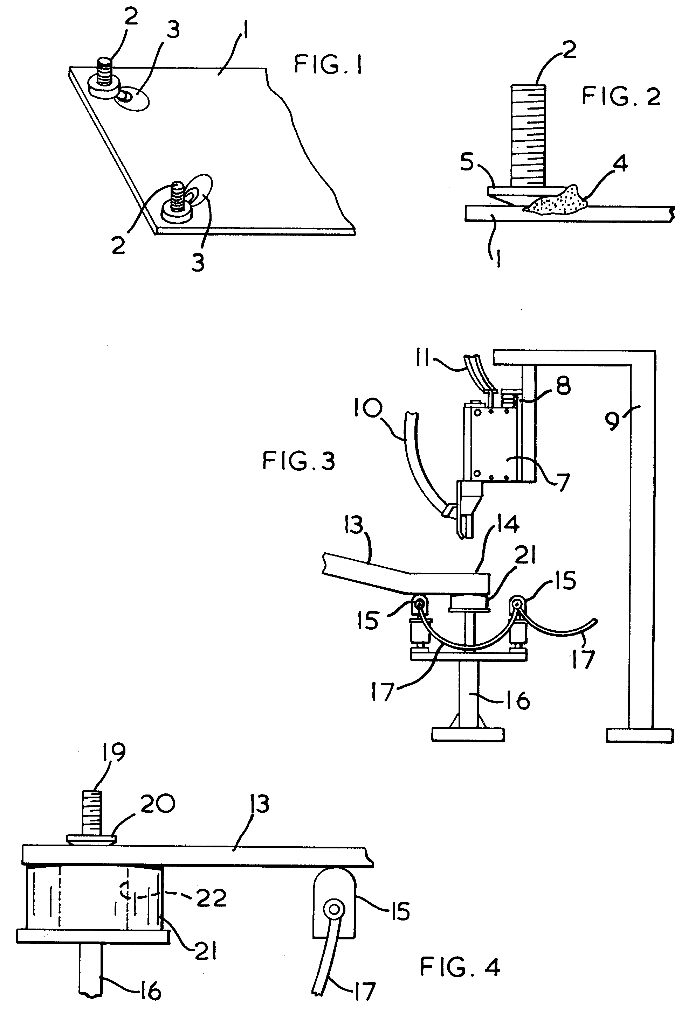

In welding a stud by the above method, and particularly when studs (2) are welded to a workpiece, it is known that arc discharges tend to wander toward the centre of the workpiece to cause arc blows (3) and that a melted portion (4) of the workpiece (1) may deviate from the centre of an end (5) of the stud (1) as shown in Figure 4. When the stud end (5) is brought to bear on the workpiece (1), the welding force of the stud may be weakened, and may even be so weak as to affect the integrity of the weld and may even give rise to separation. If the melted portion (4) is largely out of position, a fillet may stick to an upper portion of the stud which can impair the function of the stud. It is believed that the cause of the deviation of an arc discharge toward the centre of the workpiece is that a magnetic field produced by an electric current based on the arc discharge is uniform about the tip of the stud in a central area of the workpiece but deviates toward the ends of the workpiece.

Accordingly, the present invention aims to provide a stud welding process which produces a magnetic field uniformly round the tip of a stud even in an end portion of a workpiece to inhibit or prevent deviation of an arc discharge.

According to the present invention, we provide a stud welding process comprising the steps of placing the tip of a stud supported by a welding gun at a welding position of a workpiece, producing an arc discharge across the stud and the workpiece by lifting the stud from said workpiece, melting the top of the stud and a portion of the workpiece by said discharge, and plunging the stud into the molten material, characterised by the use of an annular member having an inside diameter greater than that of the stud tip and made of a magnetic permeable material, which during the arc discharge is placed on the workpiece surface on the side away from the stud and positioned so that the centre of the annular member corresponds to the position of the tip of the weld stud.

Further according to the present invention we provide modified stud welding apparatus including stud supporting, lifting and plunging means and electric arc generating means characterised by the provision of an annular member having an inside diameter greater than that of the stud and made of a magnetic permeable material arranged and adapted to abut the workpiece to which a stud is to be welded on the side of the workpiece away from the stud and positioned so that the centre of said annular member corresponds to the position of the tip of said weld stud during arc discharge.

In order that the invention may be better understood, a preferred embodiment will now be described in greater detail by way of example with reference to the accompanying drawings in which:-
Figure 1 illustrates how arc blows may be produced at end portions of a workpiece;
Figure 2 shows how a melted portion may be deviated by the production of an arc blow;
Figure 3 shows a stud welding device for carrying out the stud welding process according to the present invention, and
Figure 4 shows the relative positions of a workpiece, a stud and an annular member used in the stud welding process according to the present invention.

Referring to the drawings, in Figure 3, a welding gun (7) is supported by a stand (9) by a bracket (8), and a feed pipe (10) for studs is attached to the welding gun (7) to automatically receive a stud at the end of the gun (7). The bracket (8) supports the welding gun (7) vertically movably and a cable (11) including a power line, a control line and the like is connected to the gun (7). By the operation of a controller, the end of the stud supported by the welding gun (7) is positioned at a welding position (14) of a workpiece (13) and an arc discharge is produced across the stud and the workpiece. The discharge melts the stud end and a portion of the workpiece and the stud is welded to the workpiece when the end of stud is plunged into the molten material. On the side of the workpiece (12) away from the stud, that is, the lower surface of the workpiece, electrodes (15), for earthing the workpiece (13) are provided, with a stand (16) in-between, and earth lines (17) are respectively connected to electrodes (15).

As shown in detail also in Figure 4, according to the present invention, a hollow annular member (21) which has an inside diameter larger than an end (20) of a stud (19) and is made of a magnetic permeable material is placed on the stand (16) so that the centre of hollow portion (22) can be in position which is on the side of the workpiece away from the stud (19) (the lower surface in the drawing) and corresponds to the end (20) of the stud (19). The annular member is made, for example, of a high, magnetic permeable material, such as is used for the iron core of a transformer. The annular member (21) must be placed in the above-mentioned position (its centre positioned corresponding to the end (20) of the stud (19)) during the arc discharge.

In one experimental test, to weld an M8 x 12 mm stud to the workpiece shown in Figure 3, satisfactory welding was not possible without using the annular member (21) as an arc blow was generated which brought the molten portion out of position. An annular-shaped cylindrical member (21) having an outer diameter of 80 mm, a height of 30 mm and an inner diameter of 50 mm was placed so that the centre of the hollow portion (22) was then positioned on the surface of the workpiece on the side away from the stud (19) and corresponding to the end (20) of the stud (19) during an arc discharge. With this arrangement, arc blows ceased to be produced and welding was carried out satisfactorily; that is, whereas a magnetic field produced by an electric current based on the arc discharge previously deviated near the end (14) of the workpiece (13), the magnetic field became uniform once the annular member (21) was positioned as described above so that arc blows were avoided.

## Claims

1. A stud welding process comprising the steps of placing the tip of a stud supported by a welding gun at a welding position of a workpiece, producing an arc discharge across the stud and the workpiece by lifting the stud from said workpiece, melting the top of the stud and a portion of the workpiece by said discharge, and plunging the stud into the molten material, characterised by the use of an annular member having an inside diameter greater than that of the stud tip and made of a magnetic permeable material, which during the arc discharge is placed on the workpiece surface on the side away from the stud and positioned so that the centre of the annular member corresponds to the position of the tip of the weld stud.

2. Modified stud welding apparatus including stud supporting, lifting and plunging means and electric arc generating means characterised by the provision of an annular member having an inside diameter greater than that of the stud and made of a magnetic permeable material arranged and adapted to abut the workpiece to which a stud is to be welded on the side of the workpiece away from the stud and positioned so that the centre of said annular member corresponds to the position of the tip of said weld stud during arc discharge.
